# EUROPEAN PATENT SPECIFICATION

(11) **EP 2 822 901 B1**
(45) Date of publication and mention of the grant of the patent: **10.04.2024**
(21) Application number: 13757417.4
(22) Date of filing: 05.03.2013
(51) Int. Cl.: C02F 3/26

(54) **WATER TREATMENT SYSTEM AND METHOD**
WASSERBEHANDLUNGSSYSTEM UND VERFAHREN
SYSTÈME ET PROCÉDÉ DE TRAITEMENT DE L'EAU

(30) Priority: 06.03.2012 US 201213413445
(43) Date of publication of application: 14.01.2015
(73) Proprietor: SUPEROX WASTEWATER CO., LLC., Houston, TX 77008 (US)
(72) Inventor: Graham, Todd Dameron, Houston, TX 77027 (US); Roberts, Geoffrey Dorming, Houston, TX 77027 (US)
(74) Representative: Lewis Silkin LLP
(86) International application number: PCT/US2013/029126
(87) International publication number: WO 2013/134264

(56) References cited:
- WO-A1-2007/024893
- WO-A1-2012/084023
- WO-A2-2005/115598
- WO-A2-2007/103153
- KR-B1- 100 806 472
- US-A- 4 094 774
- US-A- 4 171 263
- US-A- 4 235 719
- US-A- 5 849 191
- US-A1- 2007 119 763
- US-A1- 2010 264 080
- US-A1- 2010 264 080
- US-B1- 7 008 535
- US-B1- 7 048 786
- US-B1- 7 270 314
- US-B1- 7 270 314

## Description

### FIELD OF THE INVENTION

The present invention relates to the treatment of water and, more particularly, to a system and method for taking liquid from inside a wastewater treatment plant or other treatment process and supersaturating the liquid with oxygen or another gas, and then re-injecting that supersaturated liquid back into the portion of the plant or process where a specified Biochemical Oxygen Demand ("BOD") or Chemical Oxygen Demand ("COD") reduction is required or where Dissolved Oxygen ("DO") levels need to meet certain operational, regulatory or permit limits.

### BACKGROUND OF THE INVENTION

Wastewater treatment is the process of removing contaminants from wastewater and raw sewage, involving effluents from runoff, domestic, commercial or industrial waste. Treatment involves using physical, chemical and biological processes to remove physical, chemical and biological contaminants. The primary objective of any wastewater process is to produce an environmentally safe, fluid waste stream and a solid waste that is suitable for disposal or reuse or return to the natural environment in a benign form acceptable to applicable regulations.

Wastewater treatment and water system treatment are referred to collectively, where appropriate, as a "Water System."

Water system treatment is the process of removing contaminants from natural and manmade sources of water, including streams, rivers, lakes, ponds, lagoons, wells and any other body or source of water that may or may not involve a dedicated plant and may be performed in situ or under existing conditions.

A typical wastewater treatment process involves two or three stages: primary, secondary and tertiary treatment. Primary treatment involves removing solids from the wastewater stream by using screens, bars and/or holding the sewage in a quiescent basin such as a grit chamber, where heavy solids can settle to the bottom while oil, grease and lighter solids float to the surface. The settled and floating material can be separated and removed and the remaining liquid may be discharged or subjected to further treatment.

Secondary treatment is typically performed by indigenous, water-borne micro-organisms in a managed habitat, such as an aeration basin followed by a settlement process, like that performed by a clarifier, to separate and remove solids. Secondary treatment usually involves a separation process to remove the micro-organisms from the treated water prior to discharge or tertiary treatment. The remaining treated wastewater can then be disinfected and discharged into the environment in streams, rivers, or used for groundwater recharge or agricultural irrigation. The solids are usually retained for further biological breakdown and then disposal, at this stage, unless the plant has tertiary treatment or is required to meet additional discharge limits that require supplemental treatment.

Tertiary treatment is an additional supplement treatment or combination of treatments and processes to allow plant effluent to meet more stringent discharge requirements. Tertiary treatment is usually site specific and typically focuses on removing additional specific constituents in the wastewater stream, such as nitrogen, phosphorus, etc. Similar to secondary treatment, the effluent is disinfected to substantially reduce the number or micro-organisms so the effluent can be used for drinking, bathing, irrigation and the like, which is typically done in a chlorine contact chamber.

One of most common types of secondary treatment processes called activated sludge, uses aerobic bacteria in the presence of oxygen, so that the bacteria can oxidize carbonaceous (biological) matter, nitrogenous matter, chemical matter, remove phosphate, drive off entrained gases, generate a biological floc that facilitates settlement of suspended solids and generate a liquor that is low in dissolved or suspended material ("Aerobic Processing"). Although this type of treatment can be very effective, it is relatively expensive because of the significant amount of power required to operate the blowers that supply air into the aeration basins, and associated pumps and motors, all of which are required to supply oxygen to the process. Air diffuser systems or jet aerators that inject air bubbles into the basin have been used on a limited basis to reduce costs.

In general there has been an industry focus on trying to find innovative ways to reduce the size of the bubbles of air to increase the effective area of the water-bubble interface and improve the effective rate that oxygen is made available to the process. Diffusers that diffuse the air or jet injection nozzles all focus on different ways to inject various size air bubbles into the process. Coarse bubble diffusers are less efficient than fine bubble diffusers, but they have fewer operational problems, such as clogging that frequently plague fine bubble diffusers due to their small holes inside the aeration basin.

The key consideration for selecting a diffuser is to make sure it will produce the required oxygen transfer rate to achieve the desired level of dissolved oxygen (DO) in the fluid in the basin. Most of these applications also rely on using ambient air for the source of oxygen, which contains approximately 20.9% oxygen. The result is that a great of energy is wasted moving 79% of the volume of air that provides little or no benefit to the aerobic process.

Thus, there is a need for a more cost efficient way to introduce oxygen in the secondary treatment stage of a wastewater treatment system, and in other water treatment processes. There is also a need for a more effective way of achieving and maintaining an optimum level of dissolved oxygen in the treatment fluid for removing organic matter from wastewater.

The owner of the inventions described herein is the assignee of U.S. Patents 7,048,786; 7,270,314; 7,491,340 and 7,544,323. These patents disclose an apparatus and method for treating a fluid to produce a high nano-sized oxygen particle concentration and a low surface tension stream. The device in the patents flows a fluid into a surface tension modification generator (STMG) at a first pressure. An energy wave or an electromagnetic wave is applied to the fluid, and the wave travels along the fluid for a defined distance to modify a physical characteristic of the fluid, forming an altered fluid. The use of an STMG or the like to super-oxygenate a liquid is referred to below as the "Process."

After the altered fluid is formed, the Process includes flowing oxygen or ozone or another gas into the altered fluid forming an altered fluid mixture. Then, the altered mixture is flowed into the inner chamber of a multi-chamber device at a second pressure, which is lower than the first pressure. The altered fluid mixture is then passed from the inner chamber through a plurality of funnels forming a turbid fluid condition at a focus point in an outside chamber to dissolve nano-sized oxygen particles into the fluid at an increased concentration, thereby forming supersaturated oxygenated water.

The above-mentioned patents describe a two-chamber atomizing carburetor for blending the gas and liquid to perform the Process. Then, in a multi-chamber device with an inner chamber with tunneled openings (diffuser), the gas and liquid are fed into an outer chamber to create extreme turbulence between an inner and outer chamber to assist in creating very tiny (sub-micron) oxygen molecules, that when combined with the first two technologies further boost the mixing of the gas into the liquid. When these components create a liquid supersaturated with the gas, a relatively high volume of liquid is required relative to the gas volume (90% - 10% liquid/gas ratio or greater).

The integrated Process for creating a supersaturated liquid described above, is not generally suitable for use in a system for wastewater treatment such as wastewater treatment plants or other types of systems such as lagoons ("Water System") where the source water has suspended material present, without substantial adaptation to mitigate the negative effect of suspended solids and materials in the water source stream. Field testing of the technology in potential wastewater applications identified a variety of materials that impair the process including but not limited to: organic or biological material, hair, floss, rags, egg shells, grit, silt, paper, metals, small pebbles, plastic, etc. The level (volume, size, composition, etc.) of this type of material depends upon the source of the water supply within the Water System, such as the collection system that supplies wastewater to wastewater treatment plant.

For use in a Water System, a suitable source for the super oxygenated liquid is difficult to find because it is not economically feasible to use clean or potable water from an external source. In a wastewater treatment plant this demand could typically require up to ½ of the plant throughput capacity. Additionally, because the liquid must have a relatively low level of suspended solids and materials in order for the Process to be effective, there is a technological and economic challenge for using the technology disclosed in the above-identified patents in Water Systems because of the high amount of total suspended solids (TSS) in the source liquid at most locations from where water can practically be drawn.

WO 2012/084023 discloses a waste water treatment system including a tank with an inlet and an outlet. The tank includes a means for extracting liquid from the tank via the outlet, oxygenating or superoxygenating it and reintroducing it into the tank. Oxygenation or superoxygenation are carried out by supplying oxygen through a gas supply device through a pressure pipe, which connects with recycling ducting.

US 2010/264080 discloses a sewage treatment plant with a membrane bioreactor (MBR) in which raw untreated or partially treated wastewater (influent) and/or mixed liquor in the intensified process is superoxygenated. In a preferred form of the process the influent is superoxygenated such that membrane air scouring requirements are reduced.

US 7270314 discloses a method for treating a fluid to increase oxygen content while reducing surface tension.

### SUMMARY OF THE INVENTION

According to the present invention, there are provided a method and system for treating wastewater as defined by the appended claims.

### BRIEF DESCRIPTION OF THE DRAWINGS

An embodiment of the invention will be explained in greater detail with reference to the appended Figures (Figures 1-2 and 4-6 are not according to this invention), in which:
FIGURE 1 is a schematic diagram of the components of a representative sewage treatment plant in the prior art.
FIGURE 2 is a schematic diagram of the components of the representative sewage treatment plant in FIG. 1, which includes the Process connected to receive liquid from the grit chamber to super-oxygenate the effluent, and showing the super-oxygenated liquid being introduced into the aeration basin.
FIGURE 3 is a schematic diagram according to the present invention and shows the components of the representative sewage treatment plant in FIG. 1, which includes the Process connected to receive liquid from the aeration basin to super-oxygenate the liquid, and showing the super-oxygenated liquid being reintroduced into the aeration basin on a closed loop basis.
FIGURE 4 is a schematic diagram of the components of the representative sewage treatment plant in FIG. 1, which includes the Process connected to receive liquid from the clarifier to super-oxygenate the liquid, and showing the super-oxygenated liquid being reintroduced into the aeration basin.
FIGURE 5 is a schematic diagram of the components of the representative sewage treatment plant in FIG. 1, which includes the Process connected to receive liquid discharged from the last stage of the system, to super-oxygenate the liquid, and showing the super-oxygenated water being introduced into the aeration basin.
FIGURE 6 is a schematic diagram of the components of a representative natural or manmade Water System, which includes the Process connected to receive liquid from one or more water sources, to super-oxygenate the liquid, and showing the super oxygenated liquid being reintroduced into the Water System.

### DETAILED DESCRIPTION

Before reviewing the embodiment of the invention in detail, it is to be understood that the invention is not limited to the particular embodiment herein and it can be practiced or carried out in various ways within the scope of the claims.

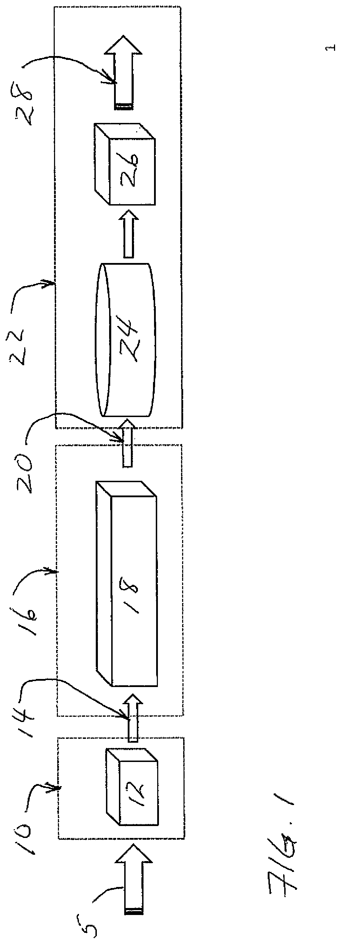

The invention relates to Water Systems, processes and plants, in which super-oxygenated liquid is introduced for treating organic and chemical material in the system process or plant. One application for the invention is in a wastewater treatment plant of the type shown in FIG. 1. In such a wastewater treatment plan, where sewage (domestic, commercial or industrial) to be treated is introduced, as represented by arrow 5, into the primary stage 10 after initial screening for removing large objects in a well known way. The primary stage 10 typically includes a quiescent basin such as a grit chamber 12 for holding raw sewage so that heavier solids can settle to the bottom while oil, grease and lighter solids can float to the surface. After the settled and floating material is removed, the remaining liquid may be discharged as shown by arrow 14.

A secondary treatment stage 16, which for the present invention is performed by removing indigenous, water-borne organic material in the form micro-organisms in a managed habitat, such as an aeration basin 18. The secondary treatment for the present invention involves a separation process to remove the micro-organisms from the treated water prior to settlement in a clarifier and then discharge for either disinfection and discharge to the local environment or subsequent tertiary treatment, illustrated by the arrow 20.

The tertiary treatment stage 22 performs additional treatment so the effluent is clean enough to meet higher quality discharge requirements. Tertiary treatment can be performed using a variety of techniques depending upon the treatment objectives. The effluent is also disinfected to substantially reduce the number of micro-organisms so that the effluent can be used for drinking, bathing, irrigation and the like. The disinfecting step can be performed in a chlorine contact chamber 26, from which effluent is discharged as shown by arrow 28.

An important aspect of the invention is to reduce or preferably, to eliminate air diffusers or jet aerators (not shown), and their associated blowers and power equipment, which have typically been used in the aeration basin 18 for raising dissolved oxygen (DO) to the desired level for aerobic processing. In accordance with the invention, instead of adding oxygen in conventional ways to the aeration basin, supersaturated oxygen is added to elevate the dissolved oxygen (DO) in the aeration basin to the desired level for effective conversion of the organic matter.

The source for the supersaturated oxygen is through the Process, which includes a device called a surface tension modification generator (STMG). An example of such a device is described in U.S. Patents 7,048,786; 7,270,314; 7,491,340 and 7,544,323. The STMG described in those patents physically changes the characteristics of the fluid and creates an altered fluid. An energy wave or an electromagnetic wave is applied to the fluid, and the wave travels along the fluid for a defined distance to modify a physical characteristic of the fluid, forming an altered fluid.

After the altered fluid is formed, oxygen, ozone or another gas is flowed into the altered fluid forming an altered fluid mixture. Then, the altered mixture is flowed into the inner chamber of a multi-chamber device at a second pressure, which is lower than the first pressure. The altered fluid mixture is then passed from the inner chamber through a plurality of funnels forming a violent turbid fluid condition at a focus point in an outside chamber to dissolve nano-sized oxygen particles into the fluid at an increased concentration, thereby forming supersaturated oxygenated fluid.

Alternative methods can be used for forming a supersaturated oxygenated fluid in the Process for introduction into oxygenating aeration basins (not part of this invention). These methods include, but are not limited to, (1) air injection, including through course and fine bubble diffusers, (2) side stream injection using a venturi or other method for mixing water and air, oxygen or other gases, (3) known pressurized oxygen delivery systems, such as Speece cones, downflow bubble contactors or sparging methods, (4) U-Tube contactor delivery and mixing systems, (5) liquid oxygen delivery and mixing systems, (6) high purity oxygen and pressure swing adsorption oxygen delivery and mixing systems, (7) cryogenic air separation delivery and mixing systems, (8) jet aerators, (9) commercial oxygen delivery and mixing systems. Any such method must be able to form supersaturated oxygenated fluid with an oxygen concentration sufficient to elevate the dissolved oxygen (DO) in the desired location in the Water System, to a level for effective conversion of the organic matter.

In order to adapt the Process for use in a Water System, substantial modification has been required to mitigate the effect of suspended solids and materials in the water source stream. Field testing of the technology in a potential Water System such as a wastewater treatment plant identified a variety of materials that impair the process including but not limited to: organic or biological material, hair, floss, rags, egg shells, grit, silt, small pebbles, plastic, metals, etc. The level (volume, size, composition, etc.) of this type of material depends upon the source of the water supply within the Water System.

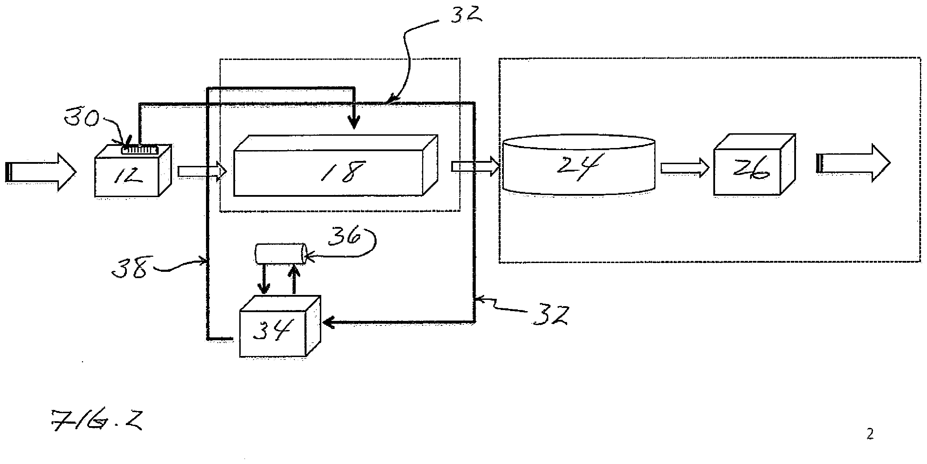

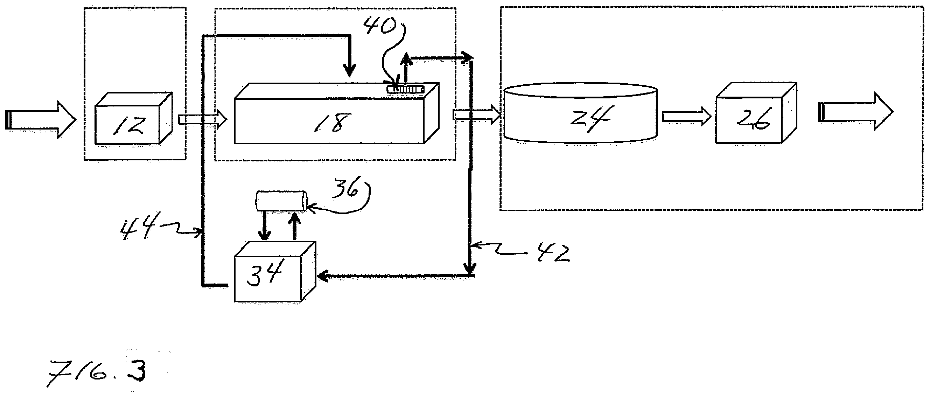

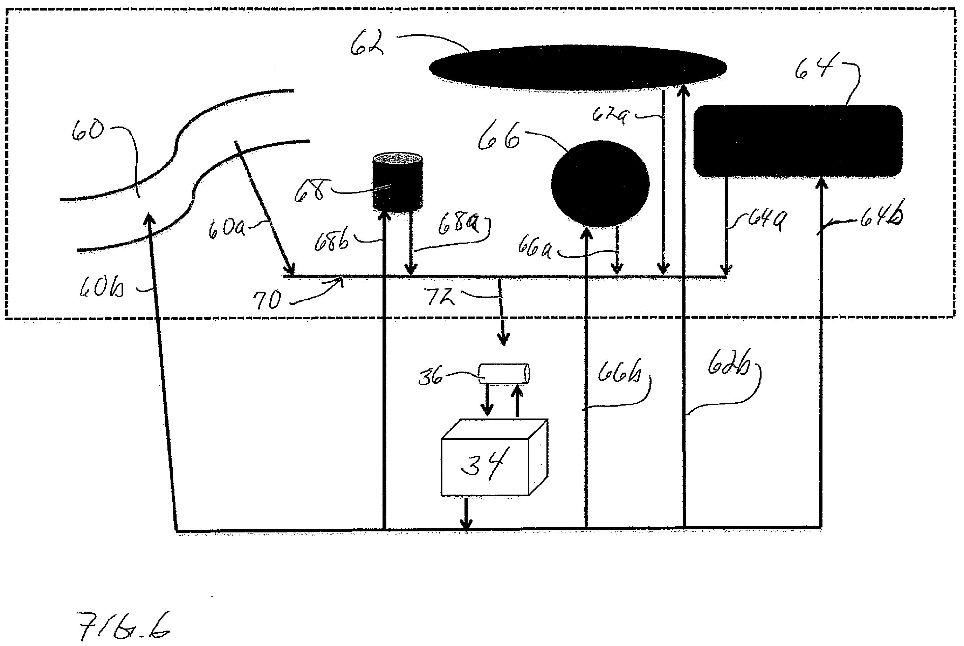

Because water demands for the super oxygenating liquid in the Process are high, and can require as much as 50% of the wastewater treatment plant throughput, it is advantageous to use liquid from anywhere in the Water System or from one of the stages of the wastewater treatment system, and then introduce the supersaturated oxygenated liquid into the aeration basin or other part of the wastewater treatment plant or Water System where the supersaturated liquid is useful for converting organic matter in the Water System. Because liquid taken from different parts of the Water System have different levels of total suspended solids (TSS), and plant hydraulics are different for liquid taken from each location within a treatment plant, the design considerations vary for each water source. Exemplary arrangements showing the fluid being taken from different stages of a wastewater treatment system are illustrated in FIGS. 2 and 4-5 (not part of this invention). An embodiment of the invention is shown in Fig. 3. A further example, not forming part of the invention, showing fluid being taken from one or more sources in a water treatment system is illustrated in FIG. 6.

FIG. 2 shows liquid being taken from the grit chamber 12 for introduction into the aeration basin 18. When liquid is taken from this source, care must be taken to manage flow in order to maintain a continuous process because the liquid supply tends to be uneven and may make this source unsuitable for a continuous process when flow rates are not predictable or have a wide variance.

A screen 30 is provided at the outlet of the grit chamber for restricting particle size to <6.4 mm (<1/4") size or less before the liquid is circulated through the conduit 32 and into the STMG 34 for performing the Process. The STMG 34 includes a filter 36 for filtering suspended material down to 400 - 1500 microns. After the liquid is supersaturated with oxygen sufficient to raise the DO in the aeration basin to the desired level, supersaturated liquid is introduced into the aeration basin 18 through a conduit 36.

Pumps (not shown) are used to circulate liquid from the grit chamber, or other source of liquid in the examples and embodiment described below, are of the type well known in the art of water treatment systems. These pumps are capable of handling a fluid with high TSS and organic or biological material, hair, floss, rags, egg shells, grit, silt, small pebbles, plastic, metals, etc. before it is filtered in advance of the Process. These types of pumps are typically referred to in the industry as trash pumps, solids pumps or sewage pumps and must be reliable and low maintenance and avoid clogging, felting and plugging. There are a variety of commercially available pumps, such as those made by the Patterson Pump Company, Division of Gorman Rupp Company, Toccoa, GA, series 10, U, V and T pumps, among others, that can meet these conditions and be optimally sized for the desired flow and pressure desired in the specific application.

Liquid from the grit chamber is of a very poor quality and typically has medium TSS (+/-500 Mg/L), and a relatively high solids count. The screen 30 can be a passive suction screen of the type used in well water applications for screening out sand and rocks from water wells. Such a screen can be designed in a way that will provide initial coarse screening of the suspended solids and material and limit the potential negative impact on existing processes.

Design considerations include utilizing designs commonly applied to down hole, water well sand screens to restrict sand from entering water wells, which are sold by a number of vendors and fabricators of equipment for the water well industry. The longitudinal screen openings must be designed with a certain minimum square area relative to fluid flow rate to minimize the pressure differential across the screen which in turn minimizes plugging resulting from the adhesion of solids on the screen surface; screen openings of a sufficiently restrictive size to limit the flow of suspended material that would otherwise impair or degrade the process. Such screens can be designed and specified by one with ordinary skill in the art in order to maintain flow across the screen face to velocities of 0.03 m/s (0.1 feet per second) or less to prevent caking or plugging of the screens.

The inlet screen must be designed to be sufficiently diffused across the basin to minimize local hydraulic imbalances, and fabricated to fit within the logistical and operational constraints of the specific plant design or Water System where the water supply is sourced.

The screen should also be designed in such a configuration to prevent air from entering the system and breaking the primary seal on the suction side of the water supply, and to avoid negatively impacting the operations of the plant itself or the water supply on a material basis.

The screen can be fabricated from a variety of known materials, from PVC to steel, stainless steel, ceramic, glass, fiberglass, metal, elastomeric materials, carbon fiber, etc. depending upon the particular water environment.

Such screens are available from known sources such as Johnson Screens, 11939 Aldine Westfield Rd., Houston TX 77093.

The filter 36 is self-cleaning with low energy requirements and low water demand during rinse cycles in a continuous flow operation required by the process, and have the following characteristics:
To efficiently be able to handle the secondary cleaning, the filter had to work with the screening solution to minimize continuous interruptions due to the rinse cycle;
The self-cleaning filter can be installed downstream of the screen and before fluid is processed in the Process; and
Rinse cycle waste can be re-injected into the aeration basin or digester.

A filter suitable for this purpose is a the ORB Series brush screen filter, Model ORB- 04-PE, which is a self-cleaning, continuous flow filter manufactured by Orival, 40 N. Van Brunt St., Englewood, NJ 07631. There are a number of similar self-cleaning, low-pressure filters that could be substituted for this part of the application.

FIG. 3 shows an embodiment of the invention where liquid is taken from the aeration basin 18, circulated through the Process, and then re -introduced into the aeration basin 18. This is the optimal source for liquid to be treated because it has no negative impact on plant hydraulics and allows for a closed loop application of the process.

A screen 40 is provided at the outlet of the aeration basin for restricting particle size to <6.4 mm (<1/4") size or less before the liquid is circulated through the conduit 42 and into the STMG 34. The STMG 34 includes a filter 36 for filtering suspended material down to 400 - 1500 microns. After the liquid is supersaturated with oxygen sufficient to raise the DO in the aeration basin or Water Source to the desired level, the liquid is re-introduced into the aeration basin 18 through a conduit 44.

Liquid from the aeration basin is the most difficult to treat because it has very high TSS (+/- 5000 Mg/L), and suspended material including fibrous material mixed with solids. The screen 30 can be a passive suction screen of the type used in drinking and irrigation water wells, with the characteristics described above in conjunction with FIG. 2.

The pumps (not shown) and filter 36 can also have the same characteristics as the ones described above in conjunction with FIG. 2.

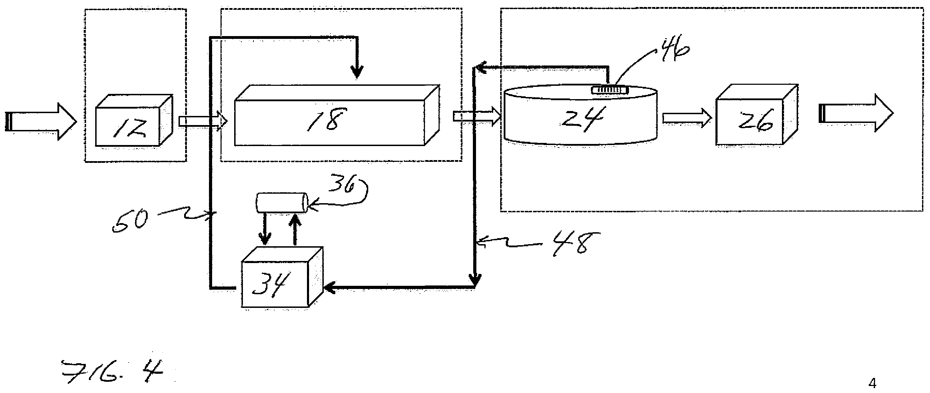

FIG. 4 shows liquid being taken from the clarifier 24, circulated through the STMG, and then introduced into the aeration basin 18. A screen 46 is provided at the outlet of the clarifier 24 for restricting particle size to <6.4 mm (<1/4") size or less before the liquid is circulated through the conduit 48 and into the Process 34. The STMG 34 includes a filter 36 for filtering suspended material down to 400 - 1500 microns. After the liquid is supersaturated with oxygen to raise the DO in the aeration basin to the desired level, it is introduced into the aeration basin 18 through a conduit 50.

The screen 46 can be a passive suction screen having the characteristics described above in conjunction with FIG 2.

The pumps (not shown) and filter 36 can also have the same characteristics as the ones described above in conjunction with FIG. 2.

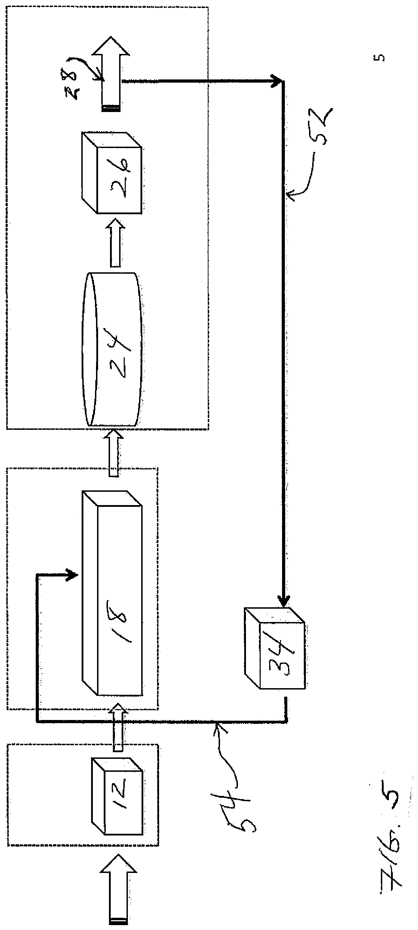

FIG. 5 shows liquid being taken from effluent steam 28 after treatment in the tertiary stage 22, circulated through a conduit 52 into the STMG 34, and then introduced into the aeration basin 18 through a conduit 54. Because the liquid has been completely treated there is no need for a screen or filter.

The effectiveness of the invention was demonstrated in a series of tests at four different wastewater treatment plants (Tests 1#-4# are not according to this invention).

Test #1 took place at a permanent in ground wastewater treatment plant with a capacity of 946 m³/day (250,000 gallons per day) (GPD) with secondary treatment that had two mirrored trains of flow with centralized clarifiers. The test focused on ½ of the plant and the Process was supplied from the clarifier. The test results confirmed that the Process could completely eliminate all of the blowers used for aeration, while maintaining acceptable DO levels of > 2.0 ppm or mg/L, reducing net solids and creating net power savings of 50-70% over prior operating conditions. The flow rates averaged 303-454 L/min (80-120 GPM) with the water sourced from the clarifier using no screen and screens similar to the detail on the attached schematic design. The DO of the output water from the Process was sufficient to raise the overall DO levels of the basin to the test result levels and were approximately 200-250% saturation.

Test #2 took place at a package wastewater treatment plant with a capacity of 1136 m³/day (300,000 gallons per day) (GPD) with secondary treatment that had a single train of flow with centralized clarifiers. The liquid was taken from the clarifier, with typical TSS of < 500 mg/L and circulated through the Process and then introduced into the aeration basin. The flow rates averaged 303-454 L/min (80-120 GPM). with the water sourced from the clarifier using no screen and screens similar to the detail on the attached schematic design. The DO of the output water from the Process was sufficient to raise the overall DO levels of the basin to the test result levels and were approximately 200-250% saturation. The test results confirmed that the Process could completely was able to improve the DO levels in the aeration basins by > 250%, reduce solids and improve the overall health of the plant while achieving electric power savings of 51%.

Test #3 took place at a larger package wastewater treatment plant with a capacity of 900,000 GPD that was split into two trains, one side which operated normally and the other side with an liquid taken from the clarifier, circulated through the Process, and then introduced into the aeration basin. This test site was on one side of a two-train plant (two independent wastewater treatment systems) with a total of 7 aeration basins and 2 clarifiers. The liquid was taken from the clarifier, circulated through the Process and then introduced into the aeration basin. During the test of this site, the Process was able to improve the DO levels of the aeration basin by over 400% while reducing overall power demand on the entire plant by 35%, reducing solids and improving the overall health of the plant by restoring DO levels to appropriate levels. In this test the flow rates varied between 378-454L/min (100-120 GPM) and was sourced from the clarifier with TSS < 500 mg/l and a variety of screen configurations were utilized. The DO of the output water from the Process was sufficient to raise the overall DO levels of the basin to the test result levels and were approximately 200-250% saturation. Plugging from organic and inorganic debris suspended in the clarifier impaired the process, by reducing flow and requiring physical clearing of the Process until the proper screening solution was discovered and designed to fit the specific local circumstances while not impairing the routine operation of the plant.

Test #4 took place at a larger package wastewater treatment plant with a capacity of 4542 m³/day (1,200,000 GPD) that was split into four trains of 2-3 aeration basins per train (9 total) and 4 clarifiers of approximately equal size. Average daily flow at the plant was approximately 90-100% or more of design capacity. Two separate Process boxes were installed at the site that and the site was plumbed to allow sourcing of the water from a variety of sources within the plant including the effluent of the plant, the clarifier or from the aeration basin. Specific local logistics prevented the sourcing of water from the equalization chamber or from another non-potable or potable water source. Each box served 2 of the process trains or approximately 50% of the plant capacity. Each box flowed Process water in a range of flows from 341-719 L/min (90-190 GPM) depending upon the source and discharge requirements of the configuration. When both boxes were configured to maximum flow rates, the daily equivalent flow was approximately 2082 m³/ day (550,000 GPD) (719 L/min (190 GPM) × 1440 minutes/day × 2 boxes) or the equivalent of 45.6% of the plant capacity. Various configurations of screens were installed until the above discovered design criteria was found and various flow configurations were experimented with to discover the best approach for various different installation configurations that would limit the introduction of solids, prevent the introduction of air to the system and minimize the impact on existing plant operations.

The characteristics of how the plant operated near its design capacity and the volume of water used in this test required that the water supply for the process be sourced from the aeration basin where TSS was routinely 4-5000 mg/l to minimize hydraulic overloading within the plant. The aeration basin also contained a variety of fibrous and solid material that impaired the process and required commercially infeasible shutdowns and maintenance to restore the process. In addition, due to the heavy loading of the plant, the amount of suspended material present when water was sourced from the clarifier with TSS < 500 mg/l also impaired the process to an extent that required screening and filtering.

In addition, there were a number of occasions when the poor quality of even the effluent source of water supply required screening and filtering to not impair the Process and the TSS was estimated to be < 500 mg/l due to a combination of heavy loading and rain events. Once the hydraulics were stabilized through the proper screening and filtering of the supply water test results confirmed that the DO of the output water from the Process was sufficient to raise the overall DO levels of the aeration basin to the test result levels and were approximately 200 - 1000% and above with supersaturated oxygenated water with DO levels of 250 - 700% mg/l from the Process. In addition the DO levels also improved in the clarifiers by 250 - 500% during the test period.

FIG. 6 shows the components of a representative natural or manmade Water System, which includes the STMG 34 connected to receive liquid from a water source, which can be one or more of a river or stream 60, a pond or lake 62, a man-made water treatment lagoon 64, a water source such as a holding tank 66 and/or an underground well 68, shown by the arrows 60a, 62a, 64a, 66a and 68a, respectively. The liquid is introduced into the STMG 34 from a header 70, as shown by the arrow 72, through the filter 36, which are similar to the STMG and filter described above for previous examples. Appropriate screens (not shown) are used for screening liquid from each of these sources, which have the same characteristics described above for previous examples.

After the fluid is supersaturated with oxygen sufficient to raise the DO in the lagoon 64 and other portions of the Water Source in which the liquid is reintroduced, the supersaturated liquid is reintroduced into one or more of the river or stream 60, the pond or lake 62, the water treatment lagoon 64, the water source such as a holding tank 66 and/or the underground well 68, as shown by the arrows 60b, 62b, 64b, 66b and 68b, respectively. In this way, organic material being treated in the lagoon 64 can be separated effectively without the need for oxygenating the water from other sources.

## Claims

1. A method for treating wastewater by separating organic matter from the wastewater, comprising the steps of:
a. introducing wastewater into a treatment facility, wherein the treatment facility comprises a grit chamber (12) and aeration bath (18);
b. removing a portion of the wastewater from the aeration bath;
c. supersaturating said portion of the wastewater with oxygen to form a supersaturated liquid that has an oxygen concentration sufficient to elevate dissolved oxygen in the wastewater being treated in the facility to a sufficient level for effective separation of the organic matter from the wastewater;
d. introducing the supersaturated liquid into the wastewater in the aeration bath (18); and
e. discharging the treated wastewater from the facility,
wherein the step of supersaturating the wastewater further includes the steps of filtering the wastewater for filtering suspended material down to 400-1500 microns, and introducing the filtered wastewater into a surface tension modification generator (STMG) for forming supersaturated oxygenated water, and
wherein prior to the step of filtering the wastewater, the solids content of the wastewater has been lowered to a particle size of <6.4 mm (<1/4") size or less.

2. A system for treating wastewater by separating organic matter from the wastewater, comprising:
a. a facility for separating organic matter from the wastewater, the facility comprising a grit chamber (12) and aeration bath (18);
b. means (32) for removing a portion of the wastewater from the aeration bath;
c. an oxygenator (34) for supersaturating a portion of the removed wastewater, the oxygenator being arranged to form a supersaturated liquid that has an oxygen concentration sufficient to elevate dissolved oxygen in the wastewater being treated in the facility to a sufficient level for effective separation of the organic matter from the wastewater;
d. means (38) for introducing the supersaturated liquid into the wastewater in the aeration bath; and
e. means (28) for discharging the treated wastewater from the facility,
wherein the oxygenator (34) comprises a surface tension modification generator (STMG) for forming supersaturated oxygenated water, the system further comprising a filter (36) for filtering suspended material in the removed wastewater down to 400-1500 microns, before the filtered wastewater is introduced into the surface tension modification generator (STMG),
the system further comprising a screen (30) arranged to lower the solids content of the removed wastewater prior to filtering to a particle size of <6.4 mm (<1/4") size or less.

## Patentansprüche

1. Verfahren zur Abwasserbehandlung durch Trennen organischer Stoffe aus dem Abwasser, umfassend die Schritte:
a. Einleiten von Abwasser in eine Aufbereitungsanlage, wobei die Aufbereitungsanlage eine Sandkammer (12) und ein Belüftungsbad (18) umfasst;
b. Entfernen eines Abschnitts des Abwassers aus dem Belüftungsbad;
c. Übersättigen des Abschnitts des Abwassers mit Sauerstoff, um eine übersättigte Flüssigkeit zu bilden, die eine Sauerstoffkonzentration aufweist, die ausreicht, um den gelösten Sauerstoff im Abwasser, das in der Anlage behandelt wird, auf ein ausreichendes Niveau für eine wirksame Trennung der organischen Stoffe aus dem Abwasser zu erhöhen;
d. Einleiten der übersättigten Flüssigkeit in das Abwasser im Belüftungsbad (18); und
e. Ableiten des behandelten Abwassers aus der Anlage,
wobei der Schritt der Übersättigung des Abwassers ferner die Schritte des Filterns des Abwassers zum Filtern von Schwebstoffen bis zu einer Größe von 400 bis 1500 Mikrometern und des Einleitens des gefilterten Abwassers in einen Oberflächenspannungsmodifikationsgenerator (Surface Tension Modification Generator, STMG) zur Bildung von übersättigtem, mit Sauerstoff angereichertem Wasser umfasst, und
wobei vor dem Schritt des Filterns des Abwassers der Feststoffgehalt des Abwassers auf eine Teilchengröße von <6,4 mm (<1/4 Zoll) oder weniger gesenkt wurde.

2. System zur Abwasserbehandlung durch Trennen organischer Stoffe aus dem Abwasser, umfassend:
a. eine Anlage zum Trennen organischer Stoffe aus dem Abwasser, wobei die Anlage eine Sandkammer (12) und ein Belüftungsbad (18) umfasst;
b. Mittel (32) zum Entfernen eines Abschnitts des Abwassers aus dem Belüftungsbad;
c. einen Oxygenator (34) zum Übersättigen eines Abschnitts des entfernten Abwassers, wobei der Oxygenator angeordnet ist, um eine übersättigte Flüssigkeit zu bilden, die eine Sauerstoffkonzentration aufweist, die ausreicht, um den gelösten Sauerstoff im Abwasser, das in der Anlage behandelt wird, auf ein ausreichendes Niveau für eine wirksame Trennung der organischen Stoffe aus dem Abwasser zu erhöhen;
d. Mittel (38) zum Einleiten der übersättigten Flüssigkeit in das Abwasser im Belüftungsbad; und
e. Mittel (28) zum Ableiten des behandelten Abwassers aus der Anlage,
wobei der Oxygenator (34) einen Oberflächenspannungsmodifikationsgenerator (Surface Tension Modification Generator, STMG) zur Bildung von übersättigtem sauerstoffhaltigem Wasser umfasst,
wobei das System ferner einen Filter (36) zum Filtern von Schwebstoffen im entfernten Abwasser auf eine Größe von 400 bis 1500 Mikrometern umfasst, bevor das gefilterte Abwasser in den Oberflächenspannungsmodifikationsgenerator (Surface Tension Modification Generator, STMG) eingeleitet wird,
wobei das System ferner ein Sieb (30) umfasst, das so angeordnet ist, dass es den Feststoffgehalt des entfernten Abwassers vor dem Filtern auf eine Teilchengröße von <6,4 mm (<1/4 Zoll) oder weniger senkt.

## Revendications

1. Procédé de traitement d'eaux usées pour séparer la matière organique des eaux usées, comprenant les étapes consistant à :
a. introduire des eaux usées dans une installation de traitement, l'installation de traitement comprenant une chambre avec gravier (12) et un bain d'aération (18) ;
b. enlever une partie des eaux usées du bain d'aération ;
c. sursaturer ladite partie d'eaux usées avec de l'oxygène pour former un liquide sursaturé qui a une concentration en oxygène suffisante pour élever l'oxygène dissous dans les eaux usées étant traitées dans l'installation à un niveau suffisant pour la séparation efficace de la matière organique des eaux usées ;
d. introduire le liquide sursaturé dans les eaux usées dans le bain d'aération (18) ; et
e. décharger les eaux usées traitées de l'installation,
l'étape de sursaturation des eaux usées comprenant en outre les étapes de filtration des eaux usées pour filtrer la matière en suspension jusqu'à 400 à 1 500 micromètres et introduire les eaux usées filtrées dans un générateur de modification de tension de surface (STMG) pour former de l'eau oxygénée sursaturée et
avant l'étape de filtration des eaux usées, la teneur en solides des eaux usées ayant été abaissée à une taille de particule de taille < 6,4 mm (< ¼") ou moins.

2. Système de traitement d'eaux usées par séparation de la matière organique des eaux usées, comprenant :
a. une installation pour séparer la matière organique des eaux usées, l'installation comprenant une chambre à gravier (12) et un bain d'aération (18) ;
b. des moyens (32) pour enlever une partie des eaux usées du bain d'aération ;
c. un oxygénateur (34) pour sursaturer une partie des eaux usées enlevées, l'oxygénateur étant disposé pour former un liquide sursaturé qui a une concentration en oxygène suffisante pour élever l'oxygène dissous dans les eaux usées étant traitées dans l'installation à un niveau suffisant pour la séparation efficace de la matière organique des eaux usées ;
d. des moyens (38) pour introduire le liquide sursaturé dans les eaux usées dans le bain d'aération ; et
e. des moyens (28) pour décharger les eaux usées traitées de l'installation,
l'oxygénateur (34) comprenant un générateur de modification de tension de surface (STMG) pour former de l'eau oxygénée sursaturée,
le système comprenant en outre un filtre (36) pour filtrer la matière en suspension dans les eaux usées enlevées jusqu'à 400 à 1 500 micromètres, avant que les eaux usées filtrées ne soient introduites dans le générateur de modification de tension de surface (STMG),
le système comprenant en outre un écran (30) pour abaisser la teneur en solides des eaux usées enlevées avant la filtration à une taille de particule de taille < 6,4 mm (1/4") ou moins.
